(19) Europäisches Patentamt / European Patent Office / Office européen des brevets

(11) **EP 3 177 754 B1**

(12) **EUROPEAN PATENT SPECIFICATION**

(45) Date of publication and mention
of the grant of the patent:
**03.10.2018 Bulletin 2018/40**

(51) Int Cl.:
**C25B 1/30** (2006.01)   **C25B 9/08** (2006.01)

(21) Application number: **15750326.9**

(22) Date of filing: **05.08.2015**

(86) International application number:
**PCT/EP2015/068091**

(87) International publication number:
**WO 2016/020453 (11.02.2016 Gazette 2016/06)**

(54) **METHOD FOR THE PRODUCTION OF HYDROGEN PEROXIDE**

VERFAHREN ZUR HERSTELLUNG VON WASSERSTOFFPEROXID

PROCÉDÉ DE PRODUCTION DE PEROXYDE D'HYDROGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2014 EP 14179927**

(43) Date of publication of application:
**14.06.2017 Bulletin 2017/24**

(73) Proprietor: **VITO NV
2400 Mol (BE)**

(72) Inventors:
• **DOMINGUEZ BENETTON, Xochitl
B-2400 Mol (BE)**
• **ALVAREZ GALLEGO, Yolanda
B-2400 Mol (BE)**

(74) Representative: **V.O.
P.O. Box 87930
Carnegieplein 5
2508 DH Den Haag (NL)**

(56) References cited:
**US-A- 5 112 702        US-A- 5 358 609
US-B1- 6 387 238        US-B2- 7 754 064**

• **Elod Gyenge ET AL: "The surfactant-Promoted
Electroreduction of Oxygen to Hydrogen
Peroxide", J. Elchem. Soc., 28 January 2005
(2005-01-28), pages D42-D53, XP055066513, DOI:
10.1149/1.1857773# Retrieved from the Internet:
URL:http://jes.ecsdl.org/content/152/3/D42 .full.
pdf [retrieved on 2013-06-13]**

**Description**

The present invention relates to a method for the production of hydrogen peroxide in an aqueous solution by electrochemical reduction of oxygen in a cathodic compartment of the device, the cathodic compartment comprising at least one cathode and an aqeous catholyte fluid, the device further comprising at least one anodic compartment in fluid communication with the cathodic compartment, wherein the cathode comprises a porous gas diffusion electrode one side of which comprises a carbon based electrochemically active layer capable of catalyzing the reduction of oxygen to hydrogen peroxide, according to the preamble of the first claim.

Hydrogen peroxide ($H_2O_2$) is a strong oxidizing agent, which is commercially available in a wide range of concentrations. Hydrogen peroxide finds application in numerous industrial processes of a.o. textile, pulp and paper, chemical, food processing, and pharmaceutical industries, industrial processing, treatment of waste water, mining industry and medical applications. The widespread applications of $H_2O_2$ and the disadvantages of the existing production processes (anthraquinone, alcohol auto oxidation, direct production) have incurred an enhanced interest for processes which involve an electrochemical synthesis of $H_2O_2$.

Early developed electrolytic processes for the production of hydrogen peroxide made use of the catalytic hydrogenation of substituted 2-alkyl-anthraquinone and subsequent reaction of the resulting 2-alkyl antraquinone with molecular oxygen to yield hydrogen peroxide and 2-alkyl antraquinone. Current commercial hydrogen peroxide production processes which supply the present demand of $H_2O_2$ worldwide, use a multistage anthraquinone oxidation. Disadvantages of this process are situated in terms of energy consumption, waste management, high production cost, adverse sustainability due to the scarcity of resources, and risks related to health and safety (Ntainjua EN et al. 2011). Another process for producing $H_2O_2$ is based on the primary and secondary partial oxidations of alcohols (Harris CR et al. 1949, Rust FF 1955). Although alcohol oxidation could provide an alternative to the anthraquinone oxidation, the purity of the hydrogen peroxide produced is not better, mainly due to the high solubility of $H_2O_2$ in alcohol.

The simplest method for the production of hydrogen peroxide is a direct synthesis by the direct reaction of $H_2$ and $O_2$. Such a process could be the future technology to replace the auto oxidation process in the presence of a suitable catalyst (Hoelderich WF et al. 2000). Nonetheless, a production process based on the direct reaction of $H_2$ and $O_2$ has limitations. $H_2/O_2$ mixtures are explosive (Samanta C 2008, Edwards J 2009), there is a risk to the occurrence of simultaneous unwanted side reactions involving decomposition of hydrogen peroxide, and the reduction of $H_2O_2$ solvent to name a few. Although it is assumed that the use of an active catalyst strictly based on palladium nano particles deposited on carbon, with an appropriate solvent (in general an alcohol), would limit side reactions (Samanta C 2008, Schlummer B et al. 2004), such a process is energy consuming and safety issues are still an important point of concern. Other catalytic processes carried out in the presence of a group VIII catalyst or an Ir based catalyst are equally inherently unsafe as they use potentially explosive $H_2$-$O_2$ mixtures in pressurized reaction vessels. An important issue is that in all of the above described processes, $H_2O_2$ decomposition reactions are intensely triggered and even when the $H_2O_2$ produced would be stabilized, the performance of the catalyst appears to be insufficient to provide an economically feasible process. Synthesis routes employing a Pd based catalyst seem to be more safe, but even in the presence of a quinone co-catalyst the $H_2O_2$ yield remains moderate (Vulpescu et al. 2004).

The existing industrial processes for hydrogen peroxide production further present significant problems of transport and storage costs, as well as storage risks, since hydrogen peroxide is produced in bulk quantities, which need to be transported to the hydrogen peroxide user and stored by this user. On-site production of hydrogen peroxide would solve these problems and would permit to reduce storage and transportation costs, as well as the associated hazards, which may even be more important.

Electrochemical synthesis of $H_2O_2$ may proceed over an oxygen reduction reaction. However, the low solubility of oxygen in aqueous solutions is one of the main problems limiting mass transfer rates in the oxygen reduction reaction. The use of gas diffusion electrodes, with a large electrochemically active reaction area, allowing for higher mass transfer rates, appeared to offer a promising option (Forti et al. 2007a ; Forti et al. 2007b). By using gas diffusion electrodes, concentrations up to 0.1-7 wt. % could be achieved (Yamanaka et al. 2011). The active layer of gas diffusion electrodes used for the cathodic reduction of oxygen to $H_2O_2$ is often made of carbon based materials, because of their large specific surface area, strong corrosion resistance and acceptable cost. Precious metals such as Pt, Ce, Ru, Ir and Rh are the most commonly used catalytic materials when $O_2$ reduction is carried out in an acidic electrolyte, whereas Mn, Ag, Ni foam, carbon or Ni mesh are frequently used to catalyse the oxygen reduction reaction in alkaline electrolytes (Giomo et al. 2008, Assumpçao et al. 2012). Some authors have used systems which do not employ metal catalysts, however they make use of carbon nano powders, which pose environmental and toxicity concerns (Yamanaka et al. 2011). The major factor contributing to the costs of operation for an electrochemical $H_2O_2$ production is electricity consumption.

Competitive $H_2O_2$ production processes should be able to produce $H_2O_2$ in a concentration of at least 0.1 wt. %, preferably at least 1.0 wt. %, while keeping electricity input as low as possible.

US7754064 discloses a device and a process for producing $H_2O_2$ from $H_2O$ using electrosynthesis. The device comprises an anolyte chamber coupled to at least one anode, which comprises a conductive, catalytically active material for example titanium, platinum, gold, silver, copper, steel, graphite, silicon, anodized titanium, reticulated vitreous carbon, or combinations thereof or a substrate coated with a metal oxide or a doped metal oxide. The anolyte feed stream contains an inert electrolyte dissolved in water, for example a sulfate, phosphate, citrate, acetate or nitrate of sodium or potassium, hydrochloric acid, hydrobromic acid, hydrogen potassium sulfate, sulfuric acid, nitric acid, citric acid, acetic acid, or combinations thereof. The catholyte chamber is coupled to at least one cathode, which is made of a conductive and catalytically active material, for example carbon, graphite, glassy carbon, reticulated vitreous carbon, carbon felt, gold, or combinations thereof. The catholyte feed stream comprises an electrolyte such as sodium chloride and/or other suitable ions in solution. A central chamber prevents migration of anions from the catholyte to the anolyte chamber, and thereby counteracts formation of unwanted side-products such as chlorine. The central chamber also controls the pH balance between the catholyte chamber and the anolyte chamber, and may thereto comprise an acid buffer and/or a sodium or potassium containing electrolyte.

In the process of US7754064, protons formed by oxidation of the water containing anolyte stream move through the central chamber to the catholyte chamber, where the oxygen containing catholyte feed stream is reduced to form peroxide ions, which react with the protons to form a catholyte exit stream containing hydrogen peroxide. As protons migrate from the anolyte chamber to the central chamber, the acidity of the electrolytic medium in the central chamber increases.

The $H_2O_2$ yields that may be achieved with the device and method disclosed in US7754064 are however limited, which may compromise the economic feasibility of the process.

The method for producing hydrogen peroxide disclosed in US6712949 involves oxidation of water at the anode of an electrolytic cell to form oxygen and protons, which are transported to the cathode in a compartmentalized electrolytic cell to prevent destruction of peroxide at the counter electrode or anode. Simultaneously, the redox catalyst of the cathode is continuously reduced by the protons formed in the anodic water reaction. Oxygen introduced at the cathode is reduced to hydrogen peroxide, preferably at current densities of at least 50 mA/cm$^2$. The redox catalyst which is bound to the cathode becomes oxidized, and is continuously regenerated electrochemically by cathodic reduction. The reaction medium comprises electrolyte solutions with strong mineral acids, such as hydrochloric acid, nitric acid, phosphoric acid, sulfuric acid, etc. Alternatively, soluble salts may be used in place of the foregoing acids.

US6254762 discloses an electrolytic cell for producing hydrogen peroxide. The cell is partitioned into an anode and a cathode chamber with a diaphragm, and has a solid ion-conductive material packed in at least one of the anode and cathode chambers for electrically connecting the diaphragm to the anode or cathode. Pure or ultrapure water is supplied to the cathode chamber, which is used as solution chamber and where hydrogen peroxide is to be generated. The anode chamber may be used as either a gas chamber or a solution chamber. However, virtually no electrolyte is dissolved. Oxygen-containing gas is supplied to the cathode, hydrogen gas or water is supplied to the anode.

US8377384 discloses an electrochemical cell arrangement for the generation of hydrogen peroxide, comprising anode and cathode electrodes with a cation exchange membrane disposed between them. An aqueous salt solution is supplied to the anode compartment and water and oxygen are supplied to the cathode compartment. An aqueous salt solution may be supplied to enhance conductivity.

US8591719 discloses an electrolysis cell for producing a 1 to 5 wt. % hydrogen peroxide containing aqueous solution, from oxygen. A separator divides the cell into a cathodic compartment and an anodic compartment. The separator comprises a first surface facing the cathodic compartment equipped with a gas-diffusion cathode comprising a catalytic porous film for the reduction of oxygen to hydrogen peroxide and with a second surface facing the anodic compartment. The cathodic compartment comprises an oxygen feed, the anodic compartment comprises an aqueous anolyte feed. The anode is equipped with a catalyst for oxygen evolution. An electric current is applied to the cell while establishing a water flow-rate of 10 to 100 l/h.m$^2$ across the separator.

US6.387.238 discloses a method for preparing an antimicrobial solution containing per-acetic acid. The method includes the electrolytic generation of hydrogen peroxide in the cathode chamber by reduction of oxygen in water and reacting such reduction species with an acetyl donor to form per-acetic acid. As a cathode use is made of a gas diffusion electrode, An oxygen containing gas, such as air is used as oxygen source. A buffering agent is added to maintain the pH of the alkaline electrolyte between 5 and 14, more preferably between 7 and 9, most preferably between 7 and 7.5. With "alkaline" is meant that the electrolyte has a higher pH than the electrolyte that is fed to the anode chamber. Suitable acidic buffering agents include acetic acid or citric acid, acetic acid having a pKa of 4.76, citric acid having successive pKa's of respectively 3.13, 4.76 and 6.39.

US5.358.609 discloses an apparatus for producing hydrogen peroxide by reduction of oxygen produced by the oxidation of water. The devices comprises a water oxidizing anode, a gas-diffusion cathode for reducing oxygen to hydrogen peroxide. The anode and cathode compartment both contain the same alkaline electrolyte, in particular an aqueous sodium hydroxide solution. The alkaline catholyte may be chosen from aqueous solutions of salts such as sodium carbonate or sodium borate. It is explained that acid is not consumed because H+ ions are generated by dissociation of water. US5.358.609 is however silent on the pH of the catholyte

The present invention seeks to provide a method with which $H_2O_2$ may be produced from an oxygen containing gas at industrially interesting yields.

This is achieved according to the present invention with a method according to claim 1.

The inventors have surprisingly found that the presence in the catholyte fluid of a weak protonic electrolyte having a pKa which is at least one unit higher than the pH of the catholyte at the onset of the electrochemical reduction of oxygen to hydrogen peroxide, results in an increased amount of $H_2O_2$ produced per time unit. With 'the onset of the electrochemical reduction of oxygen to hydrogen peroxide' is meant that the pH is measured at the start of the electrochemical reduction of oxygen. With 'the onset of the electrochemical reduction of oxygen to hydrogen peroxide' is also meant that the pH is measured before oxygen has been supplied to the catholyte, or before conversion of oxygen to hydrogen peroxide has occurred.

The inventors have not only found that the rate with which $H_2O_2$ is produced may be accelerated, but also that the $H_2O_2$ product yield may be increased. Without wanting to be bound to this theory, the inventors believe that the weak protonic electrolyte acts as a catalyst in the conversion of oxygen to hydrogen peroxide at the cathode.

The inventors have also observed that the presence of the weak protonic electrolyte has the effect that the cathode polarization potential at which hydrogen peroxide can be formed at a given amount of current may be reduced, without adverse effect to the hydrogen peroxide yield and production rate. Furthermore, it has been found that the presence of the weak protonic electrolyte may not only lead to an increased conductivity of the catholyte, but also that the current density over the cathode may be increased, which explains the observed higher $H_2O_2$ yield.

Although some of the weak protonic electrolytes may have the ability to control or minimize pH variations in the course of the oxygen reduction reaction to a certain extent, in the present invention the pH is left to evolve with time, and the reaction medium will not contain a buffering agent. In the absence of a buffering agent, the pH of the catholyte will usually increase in the course of the reaction as may be understood from reactions (2), (3) and (4) below. If it is desired to control the pH within a certain range, it may be considered to operate the device in a continuous mode and to continuously supply fresh catholyte, in particular fresh electrolyte, or it may be considerd to supply batches of fresh catholyte, in particular to supply fresh electrolyte when operating the device or reaction in a batch mode.

The present invention shows the advantage that the presence of the claimed weak protonic electrolyte in the catholyte fluid may render the process of this invention particularly suitable for use in or for direct coupling to processes employing biological material or to other processes which are highly pH dependent.

The present invention thus provides an alternative to existing processes for the production of hydrogen peroxide by electrochemical reduction of oxygen.

According to the present invention weak protonic electrolytes are understood to comprise those electrolytes whose pKa is at least one unit higher than the pH of the catholyte, so that a desired minimum degree of dissociation of the weak electrolyte in the catholyte may be ensured at the onset of the reaction. In a preferred embodiment, the weak protonic electrolyte is selected such that it has a pKa which is at least 1.25 units higher than the pH of the catholyte at the onset of the electrochemical reduction of oxygen, preferably at least 1.50 units higher, more preferably at least 2.0 units higher than the pH of the catholyte.

With a weak protonic electrolyte is meant according to the invention, either a weak protonic acid or a weak protonic base, which is present in the catholyte in a partially dissociated state. Weak protonic electrolytes suitable for use with this invention include weak mono protonic acids and weak mono protonic bases, but also weak polyprotonic acids and weak polyprotonic bases.

According to a first preferred embodiment, the weak electrolyte is a weak protonic acid, in particular a weak polyprotonic acid. A weak monoprotonic acid is a protonic acid which only partially dissociates in aqueous medium :

$$HA_{(aq)} \leftrightarrow H^+_{(aq)} + A^-_{(aq)}$$

The dissociation constant of a weak monoprotonic acid may be represented by the formula below :

$$K_a = \frac{[H^+][A^-]}{[HA]}$$

A weak polyprotonic acid is a weak acid which has more than one ionisable proton per molecule. A weak polyprotonic acid may be represented by the chemical reaction :

$$H_nA \leftrightarrow H_{n-1}A^- + H^+$$

Examples of weak protonic acids suitable for use with the present invention include those which have a pKa in the range of $2.0 \leq pKa \leq 8.0$, in particular a pKa in the range of $3.0 \leq pKa \leq 7.0$, more preferably about 7.0. The weak protonic acid will however be chosen such that the pKa of the acid is at least one unit higher than the pH of the catholyte at the onset of the reduction reaction of oxygen to hydrogen peroxide. Examples of weak protonic acids suitable for use with the device and method of the present invention include the weak protonic acids selected from the group of weak organic and weak inorganic protonic acids, in particular acetic acid, citric acid, oxalic acid, lactic acid, gluconic acid, ascorbic acid, formic acid, glycolic acid, potassium monohydrogen phosphate, potassium dihydrogen phosphate, ammonium chloride, boric acid, sodium hydrogen sulphate, sodium hydrogen carbonate, phosphoric acid, ammonium chloride, and mixtures of two or more hereof. However other weak acids considered suitable by the skilled person may be used as well. Thereby the weak protonic acid will be chosen such that its pKa is at least one unit higher than the pH of the catholyte at the onset of the oxygen reduction reaction to hydrogen peroxide. The use of phosphoric acid is particularly preferred.

According to a second preferred embodiment of this invention, the weak protonic electrolyte is preferably a weak protonic base. A weak protonic base is understood to include a base that does not fully ionize in an aqueous solution or those bases in which protonation is incomplete:

$$BH^+ \leftrightarrow B + H^+$$

represents the dissociation reaction of a monoprotonic base.

Examples of weak protonic bases suitable for use with the device and method of the present invention include those which have a pKa of between $6.0 \leq pKa \leq 12.0$, in particular $7.0 \leq pKa \leq 11.0$. Thereby, the weak protonic base will be chosen such that it has a pKa which is at least one unit higher than the pH of the catholyte at the onset of the oxygen reduction reaction. Examples of weak protonic bases suitable for use with this invention may be organic compounds or inorganic compounds, for example compounds selected from the group of ammonia, trimethylammonia, ammoniumhydroxide, pyridine, but also the conjugated bases of acetic acid, citric acid, oxalic acid, lactic acid, gluconic acid, ascorbic acid, formic acid, glycolic acid, potassium mono-hydrogenphosphate, potassium di-hydrogenphosphate, ammonium chloride, boric acid, sodium hydrogensulphate, sodium sulphate, sodium hydrogen carbonate, or a mixture of two or more of the afore mentioned compounds. However other weak protonic bases considered suitable by the skilled person may be used as well.

In the method of this invention, the cathode comprises a porous gas diffusion electrode, wherein one side of the gas diffusion electrode comprises a layer of at least one electrochemically active material capable of catalyzing the reduction of oxygen to hydrogen peroxide. Porous gas diffusion electrodes are well known to the skilled person and are for example disclosed in Y. Alvarez-Gallego et al, Electrochimica Acta, 2012, vol. 82, p. 415-426.

The electrochemically active material suitable for use within the cathode, and having a catalytically active surface capable of catalyzing the reduction of oxygen to hydrogen peroxide are generally, may be one of the frequently used materials, generally known to the skilled person . Preferred are those materials which have a surface comprising protonic acid functional groups. Particularly preferred are those materials which comprise electrically conductive particles of carbonaceous origin, more preferably those comprising electrically conductive particles of carbonaceous origin with a catalytically active surface comprising a plurality of protonic acid groups. The use of a porous carbon based material as or in the electrochemically active layer is preferred, because of its catalytic activity in combination with a reasonable cost and abundant availability in comparison to other materials.

Other electrochemically active materials suitable for use with this invention include carbonaceous materials the surface of which has been chemically modified to adapt its catalytic activity and compatibility with the reaction medium. Without wanting to be bound by this theory, it is believed that the presence of oxygen-containing functional groups support the oxygen reduction reaction to hydrogen peroxide. Particularly preferred carbon materials have a surface with quinone-type functional groups.

The voltage difference between the anode and cathode, induces at the cathode a dissociation of the water contained in the catholyte. It is assumed that the OH- ions which originate therefrom are capable of diffusing through the porous electrochemically active material of the cathode towards the bulk of the catholyte. This may give rise to a local increase of the pH in the vicinity of the active surface of the carbonaceous material, thus inducing dissociation of the protonic acid groups present on the surface :

$$C^*\text{-}RH + OH^- \rightarrow C\text{-}R^{*-} + H_2O \qquad (1).$$

wherein C*-RH represents a protonic acidic group present on the active surface of the catalytically active material.

It is believed that the protonic acidic functional groups present on the catalytically active surface of the carbonaceous material, in particular acidic functional groups of the type R-H, may partly dissociate at a corresponding pH and thereby become available for neutralization of the thus formed OH- group. The inventors also believe that the thus dissociated surface groups C-R*- are active in the electro-synthesis of $H_2O_2$, because of their high affinity for the oxygen supplied to the cathode. The presence of weak acid is believed to replenish the $H^+$ that may have reacted in reaction (1) above, thereby restore the acid-base equilibrium of the catalytically active sites and ensure that variations in the pH of the catholyte may be reduced to a minimum.

The inventors have observed that optimum acceleration of the oxygen reduction reaction to hydrogen peroxide as represented by chemical reactions (2), (3), (6) below may be achieved if the pH of the catholyte at the onset of the oxygen reduction reaction is at least 2.5 and the weak protonic electrolyte has a pKa of at least 3.5. More preferably the pH of the catholyte at the onset of the oxygen reduction reaction is about 2.7 and the weak protonic electrolyte has a pKa of 3.7 or more.

Without wanting to be bound by this theory, the inventors believe that the catalytic effect induced by the weak protonic electrolyte can be explained as outlined in the reactions (2), (3) and (6) below. The weak protonic electrolyte, in particular the weak protonic acid is believed to provide an immediate proton source to the catalytically active surface, which then becomes available for reaction with oxygen to form hydrogen peroxide. $H^+$ transport on the electrochemically active surface of the electrode as represented by reactions (2), (3) and (6) or alternatively (4), (5) and (6) is believed to be significantly faster than $H^+$ transport in solution. It is further believed that optimal reaction rate of reactions (2), (3) and (6) or alternatively (4) and (5) may be obtained at a pH of at least 2.5, preferably a pH of about 2.7.

$$4C^* - R^- + O_2(aq) + 2H_2O + 4e^- \rightarrow 4C^* - ROOH_{ads} \qquad (2)$$

$$C^* - ROOH + H^+ + e^- \rightarrow H_2O_2 + C^* - R^- \qquad (3)$$

In the presence of the weak acid, reaction 3 would be as follows:

$$C^* - ROOH + C^* - RH_{ads} + e^- \rightarrow H_2O_2 + 2C^* - R^- \qquad (6)$$

With $H_2PO_4-$ as an example of a weak acid, dissociation can be described as follows :

$$C^* - R^- + H_2PO_4 + e^- \rightarrow C^* - RH_{ads} + HPO_4^{2-} \qquad (4)$$

$$C^* - R^- + HPO_4^{2-} + e^- - C^* - RH_{ads} + PO_4^{3-} \qquad (5)$$

The inventors have observed that the reactions described above take place when use is made of a weak acid, the pKa of which is at least one unit higher than the pH of the catholyte.

The inventors have also observed that reactions (4), (5) and (6) proceed at a much higher reaction rate than reaction (3) alone, in other words, the sum of the reaction rates of reactions (4), (5) and (6) is higher than the reaction rate of reaction (3) alone.

Suitable particles of carbonaceous origin include those having a small BET surface area, but preferred are those with a high specific surface area as measured by the BET method described in ASTM D5665, in particular carbonaceous particles selected from the group of graphite, carbon nanotubes, grapheme, carbon black, activated carbon or synthetic carbons. Preferred conductive carbonaceous particles have a BET surface area of at least 50 $m^2$/g, preferably at least 100 $m^2$/g, more preferably at least 200 or 250 $m^2$/g, most preferably at least 500 $m^2$/g.

The above described electrochemically layer may be the only electrochemically active material present on the cathode. However, according to another embodiment, the above described electrochemically layer may function as a carrier for at least one other catalytic material, capable of catalyzing the reduction of oxygen to hydrogen peroxide. Materials capable of catalyzing this reaction include one or more metal selected from the group of noble metals, in particular one or more metals selected from the group of Pd, Pt, Ru, Rh, Ni, W, Fe, Se and alloys of two or more hereof, mixtures of two or more of the afore mentioned metals with their oxides, or organometallic compounds containing one or more of the afore mentioned metals. Frequently used catalysts are Pt based, and include Pt as well as PtO. Alternative catalysts suitable for use in the present invention include quinone and derivatives, transition metal macrocyclic compounds, transition metal chalcogenides and transition metal carbides.

In order to ensure a sufficiently strong binding of the electrochemically active material to the surface of the current density distributor present in the cathode, a binder material may be used, preferably a binder of a polymeric material. The polymer binder may also function to bind particles with a hydrophilic and/or hydrophobic properties to the current density distributor. A wide variety of binder materials may suitably be applied. Examples of suitable binder materials include polymeric materials such as polysulphone, polyethersulphone, polyphenylenesulfide, polyvinylchloride, chlorinated polyvinyl chloride, polyvinylidene fluoride, polyacrylonitrile, polyethyleneoxide, polymethylmethacrylate or copolymers thereof, sulfonated polymers such as perfluorosulfonic acid for example materials available under the commercial name of Nafion, terpolymers of vinylidene fluoride, hexafluoropropylene, chlorotrifluoroethylene, PTFE and mixtures or blends of two or more of these materials. Other materials considered suitable by the skilled person may be used as well.

In the method of this invention, the at least one anodic compartment and the at least one cathodic compartment are preferably separated from each other by means of an ion permeable membrane, preferably comprising a synthetic polymer material. The ion permeable membrane on the one hand ensures that cations, in particular protons, may migrate from the anode to the cathode compartment, and on the other hand serves as a gas barrier and therewith counteracts the occurrence of so-called chemical short cuts. The ion permeable membrane may also permit migration of anions from the cathode to the anode compartment. Suitable materials for use in ion permeable membranes include polyvinyldifluoride (PVDF), polytetrafluoroethylene (PTFE or Teflon), poly(ethene-co-tetrafluoroethene (EFTE), polyesters, aromatic polyamides, polyhenylenesulfide, polyolefin resins, polysulphone resins, perfltiolorovinyl ether (PFVE), tripropylene glycol, poly-1,3-butanediol or blends of two or more of these compounds. The ion permeable membrane will usually be a composite containing one or more of the afore-mentioned compounds and be obtained by dispersion of a metal oxide and/or a metal hydroxide in a solution of the polymer to increase the ionic conductivity. The ion permeable membrane may also comprise an ion exchange material if so desired.

The present invention is further illustrated in the figures and description of the figures below.

Fig. 1 is a schematic view of the device used in the method of the present invention.

Fig. 2 shows the steady state current density as a function of time for different oxygen-reducing gas-diffusion cathodes, with and without $CeO_2$ catalyst, after 120 min of electrocatalytic production of hydrogen peroxide. N: Norit, V: Vulcan-Norit, AB: Acetylene Black-Norit. All electrodes were composed of a combination of 80% carbon mixture and 20% polymer (PVDF).

Fig. 3 shows: Experiments with a cathode based on activated carbon particles in the active layer, using different concentrations of phosphate as electrolyte :

Fig. 3a) Concentration of $H_2O_2$, obtained as per CE.
Fig. 3b) Concentration obtained based on the analytical method.
Fig. 3c) pH of Anolyte and Catholyte.

Fig. 4 shows the analytical concentrations of the $H_2O_2$ obtained in the experiments of Example 2.

Fig. 5 shows electrokinetic biasing curves plotted varying the potential of the cathode vs Ag/AgCl in the range -0.5 to 0.5 at a scan rate of 1 $mV.s^{-1}$, experiments with a cathode based on graphite particles as electrocatalytically active material, using different concentrations of phosphate as electrolyte.

Figure 6 shows $H_2O_2$ production as a function of reaction time and concentration of phosphate added to the catholyte.

Fig. 7 shows the electrokinetic biasing curves plotted varying the potential of the cathode vs Ag/AgCl in the range -0.5 to 0.5 at a scan rate of 1 $mV.s^{-1}$, experiments with a cathode based on graphite particles as electrocatalytically active material, using different concentrations of citrate as electrolyte.

Fig. 8 shows $H_2O_2$ production as a function of reaction time and concentration of phosphate added to the catholyte.

Fig. 9 shows experiments with a cathode based on graphite particles as electrocatalytically active material, using different concentrations of weak acid as electrolyte. a) moles produced after 4h experiment, using hydrogen phosphate as electrolyte; b) moles produced after 4h experiment, using citrate as electrolyte.

Figure 10 shows the evolution of the pH of the catholyte with time, for varying concentrations of citric acid as weak protonic electrolyte.

Figure 11 shows the evolution of the pH of the catholyte with time, for varying concentrations of $HKH_2PO_4$ as weak protonic electrolyte.

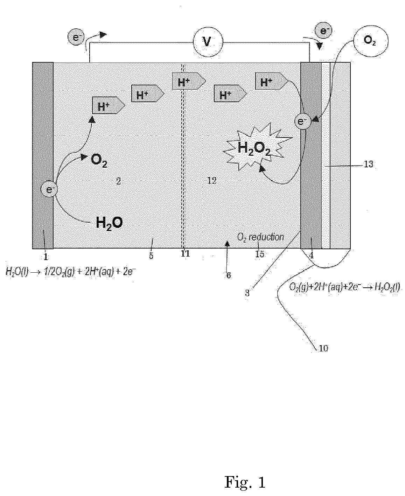

The device used in the method of the present invention for the production of hydrogen peroxide in an aqueous solution or aqueous electrolyte by reduction of oxygen shown in fig. 1, comprises at least one anodic compartment 5 and at least one cathode compartment 15. If so desired a plurality of anodic and cathode compartments may be present as well. If a plurality of anode and cathode compartments is provided, they are preferably arranged in a unipolar arrangement, with a plurality of alternating positive and negative electrodes forming a stack separated by ion permeable membranes. In a unipolar design, electrochemical cells forming the stack are externally connected, the cathodes are electrically connected in parallel as well as the anodes.

The anode or anodes 1 are immersed in an anode compartment comprising an aqueous anolyte fluid 2. The cathode or cathodes 10 are immersed in a cathode compartment comprising an aqueous catholyte fluid 12. The anodic compartment and cathodic compartment are in fluid communication to allow transport of cations, in particular transport of protons from the anodic compartment to the catholyte compartment, and transport of anions from the cathodic compartment to the anodic compartment. As anolyte fluid, any anolyte considered suitable by the skilled person may be used. In particular any aqueous electrolyte, conventionally used in electrochemical reduction reactions may be used. The anolyte may for example comprise an aqueous solution of an electrolyte selected from the group of sulphates, phosphates, chlorides and mixtures of two or more of these compounds. The anolyte chamber may comprise a supply member for feeding anolyte fluid. The catholyte chamber may comprise a supply member for feeding catholyte fluid. The catholyte may be different from the anolyte, but anolyte and catholyte may also be the same. Suitable catholyte materials include an aqueous solution of an electrolyte selected from the group of sulphates, phosphates, chlorides and mixtures of two or more of these compounds.

The device used in the method of the present invention may be operated in batch or continuous mode. When operated in continuous mode, electrolyte may continuously be recirculated or fresh electrolyte may be supplied, in particular to the cathode compartment. When operated in batch mode, electrolyte containing the reaction product may be withdrawn in particular from the cathode compartment and replenished by a corresponding batch of fresh electrolyte.

The anode and cathode compartment 5, 15 may be made of any material considered suitable by the skilled person, but are preferably made of a polymeric material. Suitable materials include polyvinylidene difluoride (PVDF), polytetrafluorethylene (PTFE), ethylene tetrafluoroethylene (EFTE), polyvinylchloride (PVC), chlorinated polyvinyl chloride (CPVC), polyacrylate, polymethylmethacrylate (PMMA), polypropylene (PP), high density polytethylene, polycarbonate and blends or composites of two or more of these compounds.

The anode and cathode compartment 5, 15 are separated from each other by an ion permeable membrane 11 to control exchange of cations and anions between both compartments, as described above. To improve structural integrity, the ion-permeable membrane 11 separating the anode and cathode compartment 5, 15 may be reinforced with a rigid support, for example a rigid support made of a sheet, a fleece, which may be woven or non-woven or otherwise made of a porous polymer or a web or a mesh of metal fibres or metal fibres arranged in a woven or non-woven structure.

The cathode 10 used is preferably a gas diffusion electrode, to ensure a suffiently high mass transfer of oxygen to the electrochemically active layer present at the cathode, and a sufficiently high reaction yield, taking into account the limited solubility of oxygen in water. The gas diffusion electrode is preferably a multilayered electrode comprising a current density distributor 3 for supplying electric current to an electrochemically active layer 4 deposited on top of the current distributor. The electrochemically active layer 4 is chosen such that it is active in the catalysis of the reduction of oxygen to hydrogen peroxide.

The electrochemically active material 4 is preferably a material which has a higher electric conductivity than the current density distributor. This permits the electrochemically active material to take away or bring the electron from and to the current density distributor. With "electrochemically active layer" is meant a layer of a material in which the electrochemical reduction of oxygen to hydrogen peroxide takes place, in particular a layer of a material having high electrical conductivity, which is porous to gas, in particular oxygen, and electrolyte. Materials suitable for use as electrochemically active layer have been described above, and comprise electrically conductive carbon particles comprising surface functional group with acidic protons, having a high specific surface area as measured by the BET method described in ASTM D5665, in particular carbon particles selected from the group of graphite, carbon nanotubes, graphene, carbon black, activated carbon or synthetic carbons.

The gas diffusion electrode that is used as the cathode 10 preferably comprises a current density distributor 3 or a current distributor, which may be made of any material and form considered suitable by the skilled person. Preferably however, use is made of a mesh type current density distributor, having a porous mesh received in a circumferential electrically conductive frame or an array of several porous meshes. The current density distributor is connected to a source of electric energy along a current feeder, for supplying electrical energy to the current density distributor. The mesh comprises a plurality of electrically conductive paths. Within the scope of the present invention with "mesh" is meant a woven, knitted, braided, welded, expanded mesh, bars or threads of electrically conductive fibers, having holes between the bars, fibers or threads to provide porosity, or a plate, sheet, foil, film made of an electrically conductive material having a plurality of perforations or holes to provide porosity. The wording "mesh" is meant to include a square meshes with a substantially rectangular shape and orientation of the conductive wires and insulating threads, but the mesh may also be tubular, or a coil film, or a otherwise shaped three-dimensional materials. Still other types of meshes suitable for use with this invention include perforated sheets, plates or foils made of a non-conductive material, having a plurality of wires or threads of a conductive material interlaced in the direction parallel to the current flow. A further type of mesh suitable for use with the present invention includes lines/wires of a conductive material, which extend parallel to the current flow direction, printed on a perforated sheet, foil or plate.

One side of the current density distributor 3 is coated with an electrochemically active layer 4 capable of catalyzing the reduction of oxygen to hydrogen. The layer of electrochemically active material 4, i.e. the layer which is catalytically active in the reduction of oxygen to hydrogen peroxide as described above, is preferably applied to the side of the current density distributor facing the gas phase. The electrochemically active layer usually has an interface with electrolyte on one surface (i.e. the side facing the current distributor) and a water repellant (hydrophobic gas diffusion) layer 13 on the other.

The electrochemically active layer 4 may be coated on the side facing the gas phase 13, with a water repellant layer 13 or a hydrophobic gas diffusion layer to minimize the risk of water leaking through the electrode into the gas phase. This water repellant layer 13 may also be deposited on top of the electrochemically active layer 4. Suitable materials for use as the water repellant layer include polyvinyldifluoride (PVDF), polytetrafluoroethylene (PTFE or Teflon), PSU, but other materials considered suitable by the skilled person may be used as well.

The device preferably comprises a supply member for supplying an oxygen containing gas to the side of the cathode comprising the electrochemically active layer. Any oxygen containing gas considered suitable by the skilled person may suitably be used. Examples include pure oxygen, a mixture of oxygen with one or more inert gases for example $N_2$, Ar, He or a mixture thereof, air, etc. Preferably, in the device of this invention the gas supply rate may be adapted, to permit controlling the hydrogen peroxide production rate and yield.

The cathodic compartment comprises on a side 6 opposite the side of the cathode comprising the electrochemically active layer 4, an inlet for supplying at least one weak protonic electrolyte, preferably an aqueous electrolyte. Preferably the flow rate with which the weak protonic electrolyte is variable and may be adapted taking into account the oxygen conversion rate to hydrogen peroxide.

The anode 1 used in the method of this invention may be a conventional electrode, or may be a gas diffusion electrode similar to the cathode.

The method may further comprise means for creating convective mass transfer in the catholyte. This may improve $H_2O_2$ reclamation from the electrochemically active layer, by increasing convective mass transfer at the catholyte site. This may also improve replenishment of $H^+$ at the position of the acidic active sites present on the surface of the electrochemically active layer. Means for creating convective mass transfer may also be provided at the anolyte site, to promote proton transfer towards and through the ion permeable membrane. The means for creating convective mass transfer may comprise those known to the skilled person, for example a stirrer, gas supply, a spacer material capable of creating turbulent flow conditions.

The method of this invention may also comprise means for optimizing the oxygen residence time at the cathode. This may be achieved by the presence of means for creating convective mass transfer in the gas phase at the cathode.

The invention is further illustrated by the examples and comparative experiments described below.

## Comparative experiments.

Experiments were performed in a half cell electrochemical reactor (Figure 1), which contained a cathode (working electrode), a reference electrode, a counter electrode, and an ionic separator between working and counter electrode. Ag/AgCl 3 M KCl (+200 mV *vs* SHE) was used as reference electrode (Koslow Scientific), whereas a Pt disk fixed by laser welding over a titanium (Ti) plate was used as a counter electrode. Cathode and counter electrode were separated by liquid electrolyte and the separating membrane, Zirfon® (AGFA), unless otherwise stated. The electrodes and membrane have a projected electrode surface area of 10 cm$^2$.

Sodium chloride solution (0.07 M) was used as both anolyte and catholyte, adjusted at pH 2.7 with 37% HCl. Air was fed to the cathodic air-compartment, at a flow rate of 402 mL min$^{-1}$ and an overpressure of 10 mbar. Electrolyte recirculated in batch mode through the cells, with a peristaltic pump (Watson-Marlow), at 20 rpm speed (equivalent to ~100 mL min$^{-1}$). The experiments were carried out at room temperature (18±2 °C).

A Bio-Logic VMP3 potentiostat/galvanostat and frequency response analyzer was used in order to perform the electrochemical measurements. EC-Lab v.10.23 software was used for data acquisition and analysis.

Chronoamperometric experiments were carried out at a different set of independent potentials (0.350, 0.250, 0.150, 0.050, -0.050, -0.150, -0.250, and -0.350, V *vs* Ag/AgCl, respectively) during a period of 120 minutes at each condition. After that time, steady state was achieved in all systems.

Afterwards, Electrochemical Impedance Spectroscopy (EIS) was recorded at a frequency range from 10 kHz to 10 mHz, with 6 points per logarithmic decade, using an amplitude of 10 mV. Validity of the data was verified by using the Kramers-Kronig transforms. Data consistency was assessed by visual inspection of successful regression to experimental data with several electrical analogues, composed of Voigt elements (Dominguez-Benetton et al., 2012). Subsequently, cyclic voltammetries (CV) were recorded in 3 cycles at 1, 10 and 100 mV s-1, respectively, in a potential range from - 0.450 to 0.450 V *vs* Ag/AgCl.

A spectrophotometric method was used to determine the concentration of $H_2O_2$ in solution. Reagent A was prepared by mixing 33 g potassium iodide, 1.0 g sodium hydroxide, and 0.1 g ammonium molybdate tetrahydrate dissolved and diluted into 500 mL deionized water. This solution was kept in dark conditions to inhibit the oxidation of I-. If the solution becomes colored, it should be remade. Reagent B was prepared by 10.0 g of potassium hydrogen phthalate (KHP) dissolved in deionized water and diluted to 500 mL.

The standard calibration curve was prepared from known concentrations of $H_2O_2$. 60 $\mu$L of 30% $H_2O_2$ were mixed with 100 mL of deionized water, in a volumetric flask. The concentration of this standard is 200 mg L$^{-1}$ $H_2O_2$. The series of dilutions were done by taking an appropriate amount of $H_2O_2$ solution for the desired concentrations, as shown in Table 1.

| Table 1:- Known concentrations of $H_2O_2$ for calibration curve. $H_2O_2$ concentration in standard samples (mg $L^{-1}$) | mL of 200 mg L-1 $H_2O_2$ standard | Final volume with deionized water (mL) |
|---|---|---|
| 0.0 | 0.0 | 100 |
| 0.5 | 0.25 | 100 |
| 1.0 | 0.50 | 100 |
| 2.0 | 1.0 | 100 |
| 3.0 | 1.5 | 100 |

Further analysis was done by pipetting 3.0 mL of "Reagent A", 3.0 mL of "Reagent B", and 3.0 mL of standard or sample into a beaker. The contents of the mixture was allowed to react for a minimum of 5 minutes, before reading the absorbance of the solution at 351 nm (reference needed). Besides the known concentrations, problem sample obtained after chronoamperometric experiments were scanned to validate the absorbance wavelength.

## $CeO_2$ catalyst preparation

$CeO_2$ at 4% by weight on the carbon support material was prepared by using the PPM (Polymeric Precursor Method). Precursor solution was prepared with 40 g of citric acid (CA) and 320 g of ethylene glycol (EG) at a 50:400 wt% ratio, at 60 °C. The catalyst was prepared by adding 0.8 g of metal into precursor solution, to satisfy 1:50:400 (Metal:CA:EG) ratio. 19.2 g of activated carbon were added into the resin. This mixture was homogenized in an ultrasonic bath for 60 min and thermally treated at 400 °C for 2 h, under N2 atmosphere. The PPM is used to produce the catalyst with a high surface area, to effectively mix different metal ions and to produce stable metal-chelate complexes to enhance H2O2 production (Assumpçao MHMT et al. 2012).

## Preparation of gas-diffusion electrodes.

Electrodes with and without catalyst were prepared according to the method described by (Alvarez-Gallego Y et al. 2012). The multilayered electrodes consisted of a current density distributor (metal gauze), with a layer of an electrocatalyst on a carbon support embedded in a porous polymer matrix applied on one side, and a hydrophobic gas-diffusion layer was present on the opposite side .

A cold-rolling method was utilized for the preparation of the gas diffusion cathodes, from carbonaceous powders and polymer binder. The carbonaceous powders and combinations thereof utilized to fabricate the different types of electrodes object of this study are described in Table 2. Stainless steel 316L gauze (wire diameter $\mu$100 m, mesh 44) was used as the current density distributor. Polyvinilydenefluoride (PVDF) was chosen as polymer binder, for both the active layer and the hydrophobic gas-diffusion layer (HGDL). The hydrophobic particles in the hydrophobic backing were FEP 8000. A typical HGDL is composed of 50% by weight PVDF and 50% by weight of FEP 8000.

Table 2:

| | Carbon material used for cathode production (% wt) | PVDF (% wt) | Metallic Catalyst CeCl2 (% wt) |
|---|---|---|---|
| 1 | Norit (80) | 20 | - |
| 2 | Norit (76) | 20 | 4 |
| 3 | Norit (50), Vulcan (30) | 20 | - |
| 4 | Norit (46), Vulcan (30) | 20 | 4 |
| 5 | Norit (50) Carbon Acetylene Black (30) | 20 | - |
| 6 | Norit (46), Carbon Acetylene Black (30) | 20 | 4 |

The percentage of the carbon materials for the fabrication of electrodes was identified on the basis of performance during the cold calendaring of carbon materials. The maximum possible percentage of carbon to incorporate with Norit was found 30% by weight, due to manufacturing restrictions.

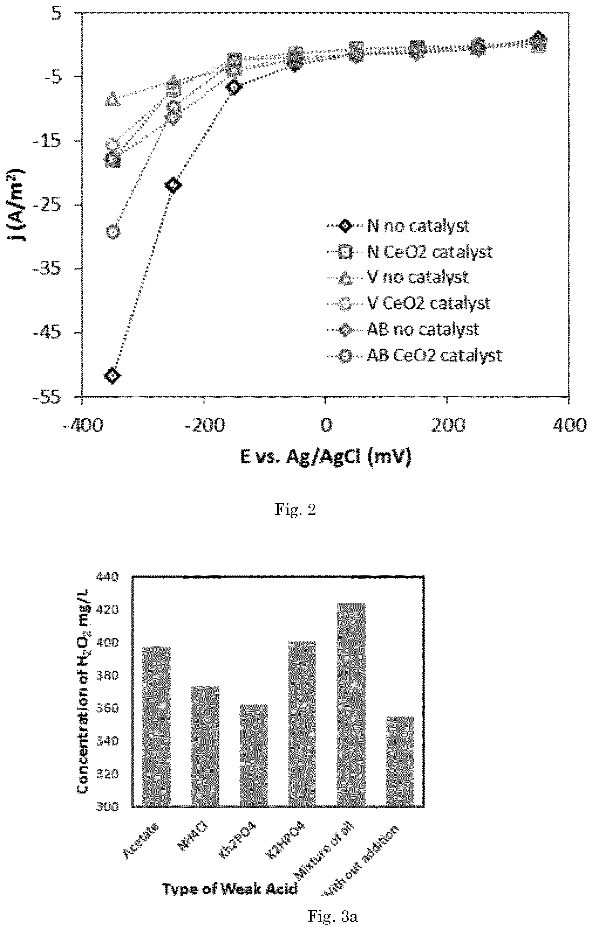

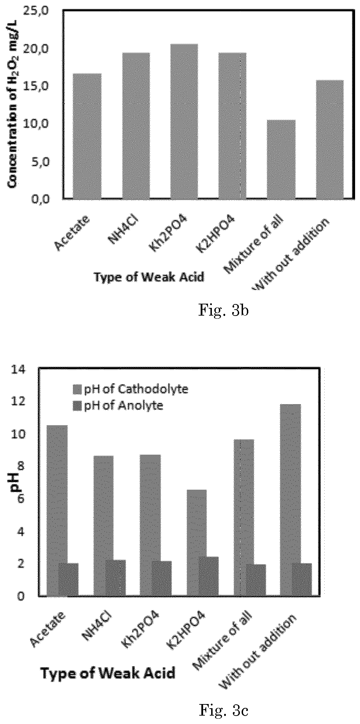

Current density (j, A $m^{-2}$) was recorded as a function of time (up to 120 min) for the different oxygen-reducing gas-diffusion cathodes, in chronoamperometric (CA) experiments at different potentials. These results were obtained at 18±1 °C, in batch mode with recirculation of electrolyte. As presented in Figure 2, the activated carbon electrode (Norit), without metallic electrocatalyst incorporated, was found to be the most active for oxygen reduction in terms of current density. Specially, this activity was significantly enhanced at -350 mV *vs* Ag/AgCl, where 51.75 A m-2 were reached. This was in good agreement with the evolution of $H_2O_2$ concentrations measured for this material, as presented in Figure 3a and 3b. Both the highest current density and the highest concentration of $H_2O_2$ were found at -350 mV *vs* Ag/AgCl. Compared to the other electrode materials without metallic catalyst incorporated, at -350 mV *vs* Ag/AgCl (i.e.Vulcan-Norit (8.42 A m-2) and Vulcan-Acetylene Black (17.9 A m-2)), the electrode made with only Norit as carbon material showed improvement in current density on 6 and 2.9 times, respectively.

**Example 1.**

Addition of 10 mM of each of the following weak acids: $KH_2PO_4$, $K_2HPO_4$, $CH_3COONa$ and a mixture thereof were added in independent electrolytes and experiments were run for 2 h at the polarization potential-350mV *vs* Ag/AgCl, as described above. Concentration of hydrogen peroxide, pH and conductivity were measured. The highest concentration of 20.5 mg L-1 H2O2 was found at -350 mV *vs* Ag/AgCl with $K_2HPO_4$, whereas 19.4 mg L-1 were obtained from sodium acetate and $KH_2PO_4$. The lowest concentration was found with the mixture of all weak acids even though; the highest concentration of 423 mg L-1 was obtained in this case based on EC. Therefore, it is considered that in the latter case, the low efficiency is due to preferential cathodic deprotonation of the weak acids and not to the formation of $H_2O_2$. Despite of the concentration of $H_2O_2$, pH of the electrolyte was found 6.51 with $K_2HPO_4$, while without the weak acid it was 11.77. Based on the performance in pH and $H_2O_2$ production, $K_2HPO_4$ was selected for further optimization, by using 100 mM of $K_2HPO_4$.
The results are illustrated in fig. 3a-3c.

**Example 2.**

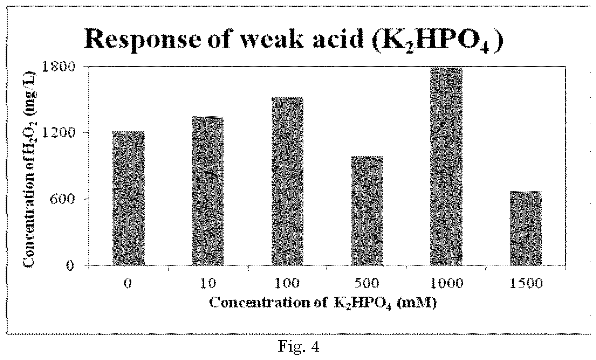

Example 1 was repeated, this time using $K_2HPO_4$ as a weak acid, in varying concentrations as illustrated in Figure 4.

**Example 3.**

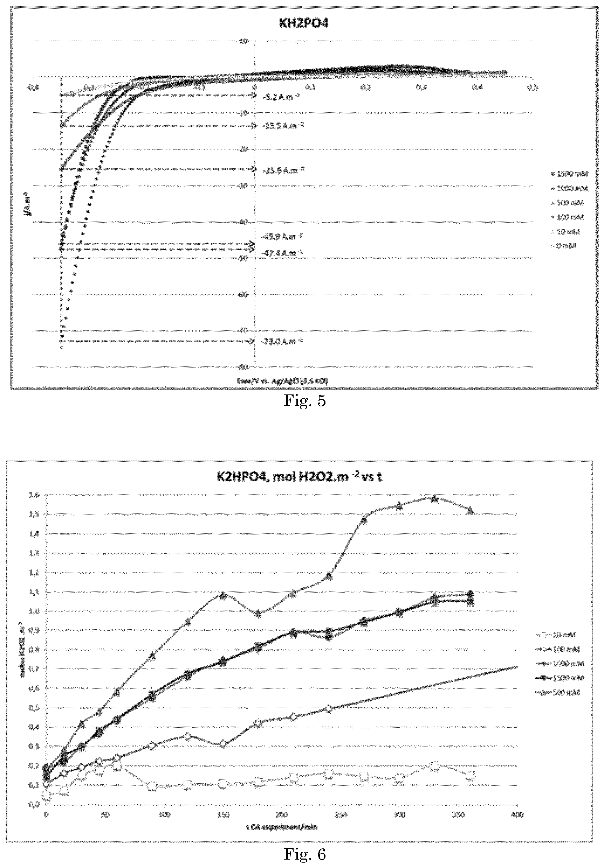

Example 2 was repeated, this time using a cathode whose active layer consisted of 80% graphite and 20% polymer binder. $KH_2PO_4$ was selected as weak acid, in varying concentrations as illustrated in Figures 5 and 6 and in table 3 below. From table 3 it may be observed that there is a dependence between the concentration of $KH_2PO_4$ used and the power administrated to the system for the electrosynthseis reaction to take place, the power density required was up to 40% of the value without $KH_2PO_4$
In figure 5 it can be appreciated that, at a selected cathode potential the current density increases as phosphate concentration increases in the electrolyte (meaning an increase in reaction rate)

Table 3

| | Ewe/V vs. Ag/AgCl / KCl (3.5M) | j/mA.m-2 | P/mWm-² |
|---|---|---|---|
| **0 mM** | -0,315 | -3,995 | 1,26 |
| **10 mM** | -0,260 | -3,965 | 1,03 |
| **100 mM** | -0,189 | -3,953 | 0,75 |
| **500 mM** | -0,232 | -4,05 | 0,94 |
| **1000 mM** | -0,195 | -3,939 | 0,77 |
| **1500 mM** | -0,250 | -4,064 | 1,02 |

Example 4.

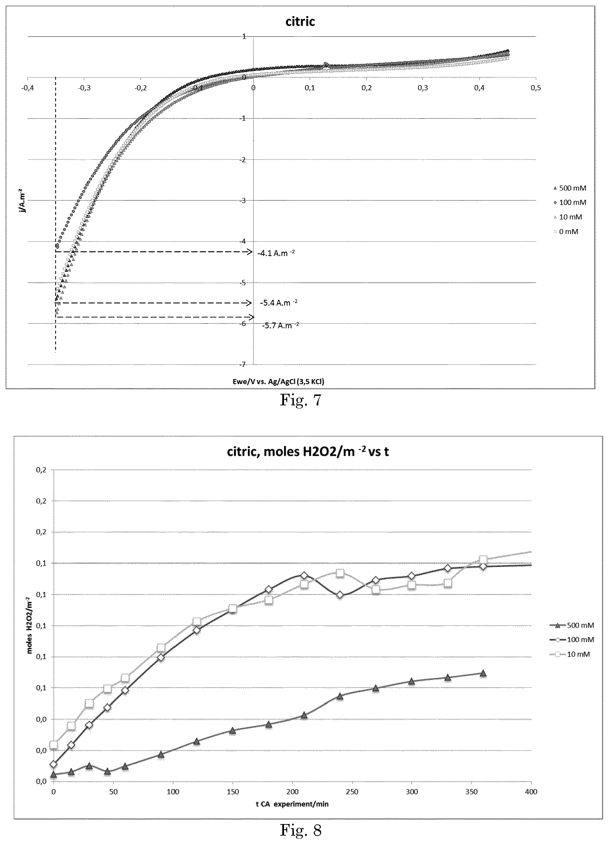

Example 1 was repeated, this time using citric acid as a weak acid, in varying concentrations as illustrated in figures 7 and 8 and in table 4 below. From table 4 it may be observed that the concentration of citric acid/citrate electrolyte did not affect substantially the power suministrated to the system for the electro synthesis reaction to take place. From Fig 8 it can be appreciated that, in contrast with experiments using phosphate as electrolyte (example 3), with citrate

$H_2O_2$ mole production did not vary substantially when citrate concentration increases from 100 mM to 500 mM, or even increased (making the process less favourable).

Table 4

| | Ewe/V vs. Ag/AgCl / KCl (3.5M) | j/mA.m-2 | P/mWm-² |
|---|---|---|---|
| 0 mM | -0,315 | -3,995 | 1,26 |
| 10 mM | -0,310 | -4,070 | 1,26 |
| 100 mM | -0,346 | -4,089 | 1,42 |
| 500 mM | -0,312 | -4,022 | 1,26 |

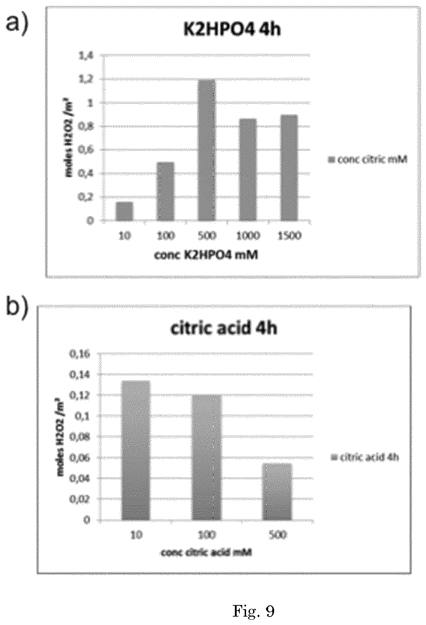

In figure 9 the results obtained in terms of moles of $H_2O_2$ "produced after 4h of experiments in example 3 are compared with those obtained in example 4, making evident the beneficial effect of using $HKH_2PO_4$ as weak protonic electrolyte.

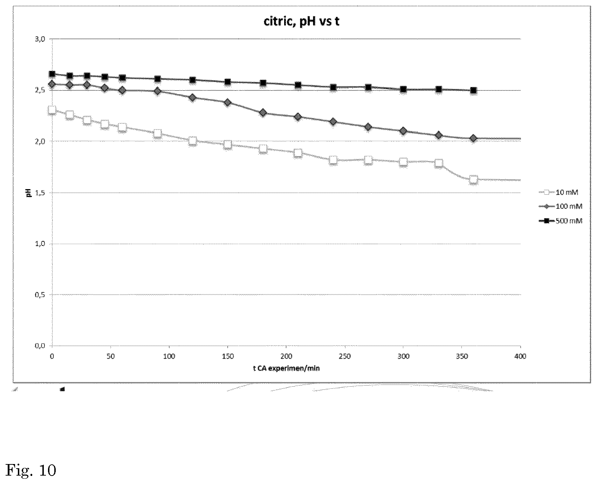

Figure 10 shows the evolution of the pH of the catholyte with time, for varying concentrations of citric acid as weak protonic electrolyte.

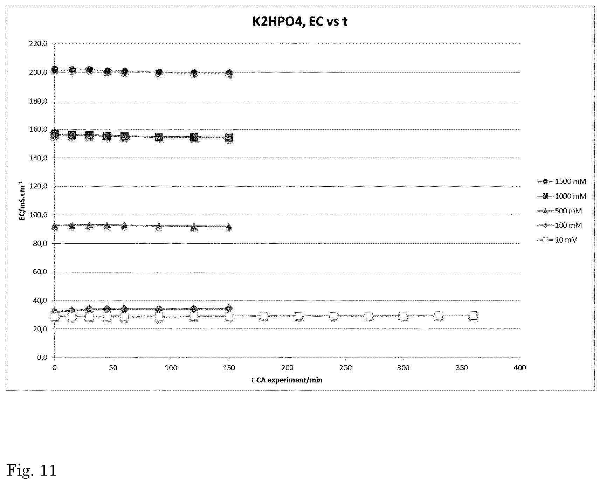

Figure 11 shows the evolution of the pH of the catholyte with time, for varying concentrations of $HKH_2PO_4$ as weak protonic electrolyte.

References

- Alvarez-Gallego, Y., Dominguez-Benetton, X., Pant, D., Diels, L., Vanbroekhoven, K., Genné, I. & Vermeiren, P. (2012). Development of gas diffusion electrodes for cogeneration of chemicals and electricity. Electrochimica Acta.
- Dominguez-Benneton, X., Sveda, S., Vanbroekhoven, K. & Pant, D. (2012). The accurate use of impedance analysis for the study of microbial electrochemical systems. Chemical Society Reviews, 41 (21), 7228-7246.
- Edwards, K. (2009). Switching Off Hydrogen Peroxide Hydrogenation in the Direct Synthesis Process. Science, 323 (5917), 1037-1041
- Forti, J. C., Nunes, J. A., Lanza, M. R. V., & Bertazzoli, R. (2007). Azobenzene-modified oxygen-fed graphite/PTFE electrodes for hydrogen peroxide synthesis. Journal of applied electrochemistry, 37(4), 527-532.
- Forti, J. C., Rocha, R. S., Lanza, M. R. V., & Bertazzoli, R. (2007). Electrochemical synthesis of hydrogen peroxide on oxygen-fed graphite/PTFE electrodes modified by 2-ethylanthraquinone. Journal of Electroanalytical Chemistry, 601(1), 63-67.
- Giomo, M., Buso, A., Fier, P., Sandonà, G., Boye, B., & Farnia, G. (2008). A small-scale pilot plant using an oxygen-reducing gas-diffusion electrode for hydrogen peroxide electrosynthesis. Electrochimica Acta, 54(2), 808-815.
- Harris, C. R. (1949). U.S. Patent No. 2,479,111. Washington, DC: US Patent and Trademark Office.
- Hoelderich, W. F. (2000). Environmentally benign manufacturing of fine and intermediate chemicals, Catalysis today, 62 (1), 115-130.
- Ntainjua, E. N., Piccinini, M., Prichard, J. C., Edwards, J. K., Carley, A. F., Kiely, C. J., & Hutchings, G. J. (2011). Direct synthesis of hydrogen peroxide using ceria-supported gold and palladium catalysts. Catalysis Today, 178(1), 47-50. doi: 10.1016/j.cattod.2011.06.024
- Rust, F. F. (1955). US Patent No. 2,717,264. Washington, DC: US Patent and Trademark Office.
- Schlummer, B. & Scholz, U. (2004). Palladium, Catalyzed C, N, and C, O Coupling-A Practical Guide from an Industrial Vantage Point. Advanced Synthesis & Catalysis, 346 (13, 15), 1599-1626.
- Samanta, C. (2008). Direct synthesis of hydrogen peroxide from hydrogen and oxygen: An overview of recent developments in the process. Applied Catalysis A: General, 350(2), 133-149.
- Vulpescu, G. D., Ruitenbeek, M., van Lieshout, L. L. Correia, L. A., Meyer, D., & Pex, P. (2004). One-step selective oxidation over a Pd-based catalytic membrane; evaluation of the oxidation of benzene to phenol as a model reaction. Catalysis Communications, 5(6), 347-351. doi: 10.1016/1.catcom.2004.04.002
- Yamanaka, I., Onisawa, T., Hashimoto, T., & Murayama, T. (2011). A Fuel, Cell Reactor for the Direct Synthesis of Hydrogen Peroxide Alkaline Solutions from H2 and O2, ChemSusChem, 4(4), 494-501.

**Claims**

1. A method for producing hydrogen peroxide in an aqueous solution by electrochemical reduction of oxygen, wherein an oxygen containing gas is supplied to an electrochemically active side of a cathode contained in the cathodic compartment, wherein the cathode comprises a porous gas diffusion electrode one side of which comprises a carbon based electrochemically active layer capable of catalyzing the reduction of oxygen to hydrogen peroxide, the cathodic compartment being in fluid communication with an anodic compartment, **characterized in that** at least one at least partly water soluble, weak protonic electrolyte is supplied to the catholyte, wherein the weak protonic electrolyte has a pKa which is at least one unit higher than the pH of the catholyte at the onset of the oxygen reduction reaction to hydrogen peroxide, wherein the catholyte is not pH buffered and the pH of the catholyte is let to evolve in the course of the reaction.

2. A method as claimed in claim 1, wherein the pKa of the weak protonic electrolyte is at least 1.25 units higher than the pH of the catholyte, preferably at least 1.50 units higher, more preferably at least 2.0 units higher than the pH of the catholyte at the onset of the oxygen reduction reaction.

3. A method as claimed in claim 1 or 2, wherein the weak protonic electrolyte is a weak protonic acid **having a pKa in the range of $2.0 \leq pKa \leq 8.0$** or a weak protonic base **having a pKa of between $6.0 \leq pKa \leq 12.0$.**

4. A method as claimed in any one of claims 1-3, wherein the pH of the catholyte at the onset of the oxygen reduction reaction is at least 2.5 and the weak protonic electrolyte has a pKa of at least 3.5.

5. A method as claimed in any of the previous claims, wherein the weak protonic acid is selected from the group of weak organic and weak inorganic acids, in particular acetic acid, citric acid, oxalic acid, lactic acid, gluconic acid, ascorbic acid, formic acid, glycolic acid, potassium monohydrogen phosphate, potassium dihydrogen phosphate, ammonium chloride, boric acid, sodium hydrogen sulphate, sodium hydrogen carbonate, ammonium chloride, and mixtures of two or more hereof.

6. A method as claimed in any one of claims 1-4, wherein the weak protonic base has a pKa of between 7.0 and 11.0.

7. A method as claimed in claim 6, wherein the weak protonic base is selected from the group of ammonia, trimethylammonia, ammoniumhydroxide, pyridine, the conjugated bases of acetic acid, citric acid, oxalic acid, lactic acid, gluconic acid, ascorbic acid, formic acid, glycolic acid, potassium monohydrogen phosphate, potassium dihydrogen phosphate, ammonium chloride, boric acid, sodium hydrogen sulphate, sodium hydrogen carbonate, or a mixture of two or more of the afore mentioned compounds.

8. A method as claimed in any of claims 1 to 7, wherein the oxygen containing gas is selected from the group of air, pure oxygen, a mixture of oxygen with one or more inert gases for example $N_2$, Ar, He, or a mixture of two or more of the afore mentioned gases.

9. A method according to any one of claims 1-8, wherein the electrochemically active layer comprises electrically conductive carbonaceous particles with a catalytically active surface comprising protonic acidic functional groups.

10. A method according to any one of claims 1 to 9, wherein the method is operated in a continuous process, and the weak protonic electrolyte is supplied with a constant flow rate or the flow rate of the weak protonic electrolyte is variable.

11. A method according to any of the previous claims, wherein convective mass transfer is created in the catholyte and preferably also in the anolyte.

12. A method as claimed in any of the claims 1-11, wherein the side of the electrochemically active layer of the gas diffusion electrode facing the gas phase, is coated with a layer of a hydrophobic material which is permeable to oxygen, preferably a hydrophobic material selected from the group of polyvinyldifluoride (PVDF), polytetrafluoroethylene (PTFE or Teflon), PSU.

13. A method as claimed in any of claims 1-12, wherein the at least one anodic compartment and the at least one cathodic compartment are separated from each other by means of an ion permeable membrane, preferably a cation permeable membrane.

**Patentansprüche**

1. Verfahren zur Herstellung von Wasserstoffperoxid in einer wässrigen Lösung durch elektrochemische Reduktion von Sauerstoff, wobei ein sauerstoffhaltiges Gas einer elektrochemisch aktiven Seite einer Kathode, eingeschlossen in der Kathodenkammer, zugeführt wird, wobei die Kathode eine poröse Gasdiffusionselektrode umfasst, von der eine Seite eine kohlenstoffbasierte elektrochemisch aktive Schicht umfasst, die fähig ist, die Reduktion von Sauerstoff zu Wasserstoffperoxid zu katalysieren, die kathodische Kammer in Flüssigkeitskommunikation mit einer anodischen Kammer ist, **dadurch gekennzeichnet, dass** mindestens ein zumindest teilweise wasserlöslicher, schwach protonischer Elektrolyt dem Katholyten zugeführt wird, wobei der schwach protonische Elektrolyt einen pKa hat, der mindestens eine Einheit höher ist als der pH des Katholyten zu Beginn der Sauerstoffreduktionsreaktion zu Wasserstoffperoxid, wobei der Katholyt nicht pH-gepuffert ist und der pH des Katholyten im Lauf der Reaktion entstehen darf.

2. Verfahren nach Anspruch 1, wobei der pKa des schwach protonischen Elektrolyten mindestens 1,25 Einheiten höher ist als der pH des Katholyten, bevorzugt mindestens 1,50 Einheiten höher, bevorzugter mindestens 2,0 Einheiten höher als der pH des Katholyten zu Beginn der Sauerstoffreduktionsreaktion.

3. Verfahren nach Anspruch 1 oder 2, wobei der schwach protonische Katholyt eine schwach protonische Säure ist **mit einem pKa im Bereich von 2,0 ≤ pKa ≤ 8,0** oder eine schwach protonische Base **mit einem pKa zwischen 6,0 ≤ pKa ≤ 12,0.**

4. Verfahren nach einem der Ansprüche 1-3, wobei der pH des Katholyten zu Beginn der Sauerstoffreduktionsreaktion mindestens 2,5 ist und der schwach protonische Elektrolyt einen pKa von mindestens 3,5 hat.

5. Verfahren nach einem der vorhergehenden Ansprüche, wobei die schwach protonische Säure ausgewählt ist aus der Gruppe schwach organischer und schwach anorganischer Säuren, insbesondere Essigsäure, Zitronensäure, Oxalsäure, Milchsäure, Gluconsäure, Ascorbinsäure, Ameisensäure, Glycolsäure, Kaliummonowasserstoffphosphat, Kaliumdiwasserstoffphosphat, Ammoniumchlorid, Borsäure, Natriumwasserstoffsulfat, Natriumwasserstoffcarbonat, Ammoniumchlorid und Gemischen von zwei oder mehr davon.

6. Verfahren nach einem der Ansprüche 1-4, wobei die schwach protonische Base einen pKa von zwischen 7,0 und 11,0 hat.

7. Verfahren nach Anspruch 6, wobei die schwach protonische Base ausgewählt ist aus der Gruppe von Ammoniak, Trimethylammoniak, Ammoniumhydroxid, Pyridin, den konjugierten Basen von Essigsäure, Zitronensäure, Oxalsäure, Milchsäure, Gluconsäure, Ascorbinsäure, Ameisensäure, Glycolsäure, Kaliummonowasserstoffphosphat, Kaliumdiwasserstoffphosphat, Ammoniumchlorid, Borsäure, Natriumwasserstoffsulfat, Natriumwasserstoffcarbonat oder einem Gemisch aus zwei oder mehr der vorgenannten Verbindungen.

8. Verfahren nach einem der Ansprüche 1 bis 7, wobei das sauerstoffhaltige Gas ausgewählt ist aus der Gruppe von Luft, reinem Sauerstoff, einem Gemisch aus Sauerstoff mit einem oder mehr inerten Gasen, zum Beispiel $N_2$, Ar, He oder einem Gemisch aus zwei oder mehr der vorgenannten Gase.

9. Verfahren nach einem der Ansprüche 1-8, wobei die elektrochemisch aktive Schicht elektrisch leitende kohlenstoffhaltige Teilchen mit einer katalytisch aktiven Oberfläche, umfassend protonisch saure, funktionale Gruppen, umfasst.

10. Verfahren nach einem der Ansprüche 1 bis 9, wobei das Verfahren in einem kontinuierlichen Prozess betrieben wird und der schwach protonische Elektrolyt mit einer konstanten Fließrate zugeführt wird oder die Fließrate des schwach protonischen Elektrolyten variabel ist.

11. Verfahren nach einem der vorhergehenden Ansprüche, wobei verbindende Masseübertragung in dem Katholyten und bevorzugt auch in dem Anolyten bewerkstelligt wird.

12. Verfahren nach einem der Ansprüche 1-11, wobei die Seite der elektrochemisch aktiven Schicht der Gasdiffusionselektrode gegenüber der Gasphase beschichtet ist mit einer Schicht eines hydrophoben Materials, das sauerstoffdurchlässig ist, bevorzugt eines hydrophoben Materials, ausgewählt aus der Gruppe von Polyvinyldifluorid (PVDF), Polytetrafluorethylen (PTFE oder Teflon), PSU.

**13.** Verfahren nach einem der Ansprüche 1-12, wobei mindestens eine anodische Kammer und die mindestens eine kathodische Kammer mittels einer ionendurchlässigen Membran, bevorzugt einer kationdurchlässigen Membran, voneinander getrennt sind.

**Revendications**

**1.** Procédé de production de peroxyde d'hydrogène dans une solution aqueuse par réduction électrochimique d'oxygène, dans lequel un gaz contenant de l'oxygène est introduit du côté électrochimiquement actif d'une cathode qui se trouve à l'intérieur d'un compartiment cathodique, laquelle cathode comprend une électrode poreuse à diffusion de gaz dont un côté porte une couche électrochimiquement active, à base de carbone, capable de catalyser la réaction de réduction de l'oxygène en peroxyde d'hydrogène, le compartiment cathodique étant en communication fluide avec un compartiment anodique, lequel procédé est **caractérisé en ce qu'**au moins un électrolyte protonique faible, au moins partiellement soluble dans l'eau, est ajouté au catholyte, étant entendu que l'électrolyte protonique faible présente un pKa dont la valeur est supérieure d'au moins une unité au pH du catholyte au démarrage de la réaction de réduction de l'oxygène en peroxyde d'hydrogène, le catholyte n'étant pas tamponné pour le pH et le pH du catholyte pouvant évoluer librement au cours de la réaction.

**2.** Procédé conforme à la revendication 1, dans lequel le pKa de l'électrolyte protonique faible a une valeur supérieure d'au moins 1,25 unité au pH du catholyte, de préférence une valeur supérieure d'au moins 1,50 unité, et mieux encore une valeur supérieure d'au moins 2,0 unités au pH du catholyte au démarrage de la réaction de réduction de l'oxygène.

**3.** Procédé conforme à la revendication 1 ou la revendication 2, dans lequel l'électrolyte protonique faible est un acide protonique faible dont le pKa a une valeur comprise dans l'intervalle allant de 2,0 à 8,0, bornes comprises ($2,0 \leq pKa \leq 8,0$), ou une base protonique faible dont le pKa a une valeur comprise dans l'intervalle allant de 6,0 à 12,0, bornes comprises ($6,0 \leq pKa \leq 12,0$).

**4.** Procédé conforme à l'une quelconque des revendications 1 à 3, dans lequel le pH du catholyte au démarrage de la réaction de réduction de l'oxygène vaut au moins 2,5 et l'électrolyte protonique faible présente un pKa valant au moins 3,5.

**5.** Procédé conforme à n'importe laquelle des revendications précédentes, dans lequel l'acide protonique faible est choisi dans l'ensemble constitué par des acides organiques faibles et des acides minéraux faibles, et en particulier les suivants : acide acétique, acide citrique, acide oxalique, acide lactique, acide gluconique, acide ascorbique, acide formique, acide glycolique, monohydrogéno-phosphate de potassium, dihydrogéno-phosphate de potassium, chlorure d'ammonium, acide borique, hydrogéno-sulfate de sodium, hydrogéno-carbonate de sodium et chlorure d'ammonium, ainsi que les mélanges d'au moins deux d'entre eux.

**6.** Procédé conforme à l'une quelconque des revendications 1 à 4, dans lequel la base protonique faible présente un pKa de valeur comprise entre 7,0 et 11,0.

**7.** Procédé conforme à la revendication 6, dans lequel la base protonique faible est choisie dans l'ensemble constitué par l'ammoniac, le triméthyl-ammoniac, l'hydroxyde d'ammonium, la pyridine, les bases conjuguées des acides suivants : acide acétique, acide citrique, acide oxalique, acide lactique, acide gluconique, acide ascorbique, acide formique, acide glycolique, monohydrogéno-phosphate de potassium, dihydrogéno-phosphate de potassium, chlorure d'ammonium, acide borique, hydrogéno-sulfate de sodium et hydrogéno-carbonate de sodium, ainsi que les mélanges d'au moins deux des composés précédemment cités.

**8.** Procédé conforme à n'importe laquelle des revendications 1 à 7, dans lequel le gaz contenant de l'oxygène est choisi dans l'ensemble constitué par de l'air, de l'oxygène pur, un mélange d'oxygène avec un ou plusieurs gaz inerte(s), par exemple de l'azote, de l'argon ou de l'hélium, et les mélanges d'au moins deux des gaz précédemment cités.

**9.** Procédé conforme à l'une quelconque des revendications 1 à 8, dans lequel la couche électrochimiquement active comprend des particules carbonées électroconductrices présentant une surface catalytiquement active, porteuse de groupes fonctionnels à caractère acide protonique.

**10.** Procédé conforme à l'une quelconque des revendications 1 à 9, dans lequel le procédé fonctionne en continu, et l'électrolyte protonique faible est ajouté à débit constant ou le débit de l'électrolyte protonique faible est variable.

**11.** Procédé conforme à n'importe laquelle des revendications précédentes, dans lequel un transfert de masse convectif est créé dans le catholyte, et de préférence aussi dans l'anolyte.

**12.** Procédé conforme à n'importe laquelle des revendications 1 à 11, dans lequel le côté de la couche électrochimiquement active de l'électrode à diffusion de gaz faisant face à la phase gazeuse est revêtu d'une couche d'une matière hydrophobe qui est perméable à l'oxygène, cette matière hydrophobe étant choisie, de préférence, dans l'ensemble constitué par un poly(fluorure de vinylidène) (PVDF), un poly(tétrafluoroéthylène) (PTFE ou Téflon) et une polysulfone (PSU).

**13.** Procédé conforme à n'importe laquelle des revendications 1 à 12, dans lequel le compartiment anodique, au nombre d'au moins un, et le compartiment cathodique, au nombre d'au moins un, sont séparés l'un de l'autre par une membrane perméable aux ions, de préférence une membrane perméable aux cations.

$H_2O(l) \rightarrow 1/2O_2(g) + 2H^+(aq) + 2e^-$

$O_2(g) + 2H^+(aq) + 2e^- \rightarrow H_2O_2(l)$

Fig. 1

Fig. 2

Fig. 3a

Fig. 3b

Fig. 3c

Fig. 4

Fig. 5

Fig. 6

Fig. 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7754064 B
- US 6712949 B
- US 6254762 B
- US 8377384 B
- US 8591719 B
- US 6387238 B
- US 5358609 A
- US 2479111 A, Harris, C. R.
- US 2717264 A, Rust, F. F.

### Non-patent literature cited in the description

- **Y. ALVAREZ-GALLEGO et al.** *Electrochimica Acta,* 2012, vol. 82, 415-426
- **ALVAREZ-GALLEGO, Y. ; DOMINGUEZ-BENETTON, X. ; PANT, D. ; DIELS, L. ; VANBROEKHOVEN, K. ; GENNÉ, I. ; VERMEIREN, P.** Development of gas diffusion electrodes for cogeneration of chemicals and electricity. *Electrochimica Acta,* 2012
- **DOMINGUEZ-BENNETON, X. ; SVEDA, S. ; VANBROEKHOVEN, K. ; PANT, D.** The accurate use of impedance analysis for the study of microbial electrochemical systems. *Chemical Society Reviews,* 2012, vol. 41 (21), 7228-7246
- **EDWARDS, K.** Switching Off Hydrogen Peroxide Hydrogenation in the Direct Synthesis Process. *Science,* 2009, vol. 323 (5917), 1037-1041
- **FORTI, J. C. ; NUNES, J. A. ; LANZA, M. R. V. ; BERTAZZOLI, R.** Azobenzene-modified oxygen-fed graphite/PTFE electrodes for hydrogen peroxide synthesis. *Journal of applied electrochemistry,* 2007, vol. 37 (4), 527-532
- **FORTI, J. C. ; ROCHA, R. S. ; LANZA, M. R. V. ; BERTAZZOLI, R.** Electrochemical synthesis of hydrogen peroxide on oxygen-fed graphite/PTFE electrodes modified by 2-ethylanthraquinone. *Journal of Electroanalytical Chemistry,* 2007, vol. 601 (1), 63-67
- **GIOMO, M. ; BUSO, A. ; FIER, P. ; SANDONÀ, G. ; BOYE, B. ; FARNIA, G.** A small-scale pilot plant using an oxygen-reducing gas-diffusion electrode for hydrogen peroxide electrosynthesis. *Electrochimica Acta,* 2008, vol. 54 (2), 808-815
- **HOELDERICH, W. F.** Environmentally benign manufacturing of fine and intermediate chemicals. *Catalysis today,* 2000, vol. 62 (1), 115-130
- **NTAINJUA, E. N. ; PICCININI, M. ; PRICHARD, J. C. ; EDWARDS, J. K. ; CARLEY, A. F. ; KIELY, C. J. ; HUTCHINGS, G. J.** Direct synthesis of hydrogen peroxide using ceria-supported gold and palladium catalysts. *Catalysis Today,* 2011, vol. 178 (1), 47-50
- **SCHLUMMER, B. ; SCHOLZ, U.** Palladium, Catalyzed C, N, and C, O Coupling-A Practical Guide from an Industrial Vantage Point. *Advanced Synthesis & Catalysis,* 2004, vol. 346 (13,15), 1599-1626
- **SAMANTA, C.** Direct synthesis of hydrogen peroxide from hydrogen and oxygen: An overview of recent developments in the process. *Applied Catalysis A: General,* 2008, vol. 350 (2), 133-149
- **VULPESCU, G. D. ; RUITENBEEK, M. ; VAN LIESHOUT, L. L. ; CORREIA, L. A. ; MEYER, D. ; PEX, P.** One-step selective oxidation over a Pd-based catalytic membrane; evaluation of the oxidation of benzene to phenol as a model reaction. *Catalysis Communications,* 2004, vol. 5 (6), 347-351
- **YAMANAKA, I. ; ONISAWA, T. ; HASHIMOTO, T. ; MURAYAMA, T.** A Fuel, Cell Reactor for the Direct Synthesis of Hydrogen Peroxide Alkaline Solutions from H2 and O. *ChemSusChem,* 2011, vol. 4 (4), 494-501